Europäisches Patentamt

(19) European Patent Office

Office européen des brevets

(11) Publication number: **0 267 889**
**B1**

## (12) EUROPEAN PATENT SPECIFICATION

(45) Date of publication of the patent specification:
08.08.90

(51) Int. Cl.⁵: **B62D 27/06**

(21) Application number: **87850348.1**

(22) Date of filing: **13.11.87**

(54) A device at stanchions at vehicle load platforms for locking platform side- and tailboards.

(30) Priority: **14.11.86  SE 8604878**

(43) Date of publication of application:
**18.05.88 Bulletin 88/20**

(45) Publication of the grant of the patent:
**08.08.90 Bulletin 90/32**

(84) Designated Contracting States:
**BE CH DE ES FR GB IT LI NL SE**

(56) References cited:
**AT-A- 325 430**
**SE-B- 443 542**
**SE-C- 218 048**
**SE-C- 222 820**

(73) Proprietor: **Rosén, Göran, Dieselstrasse 2-6,
D-6352 Ober-Mörlen(DE)**

(72) Inventor: **Rosén, Göran, Dieselstrasse 2-6,
D-6352 Ober-Mörlen(DE)**

(74) Representative: **Roth, Ernst Adolf Michael et al,
GÖTEBORGS PATENTBYRA AB Box 5005,
S-402 21 Göteborg(SE)**

## Description

The present invention refers to a device at stanchions for vehicle load platforms, to which stanchions, in their active closing position, platform boards are lockable, whereby the stanchion has an operating lever, which via a link is connected to a pivotably supported locking clapper adapted to cooperate with a locking lug provided at the side edge of the platform board, whereby the operating lever and the link together form a toggle joint, which, at pivoting of the operating lever to locking position, passes its extended position and during said pivoting moves the locking clapper to its active position.

## BACKGROUND OF THE INVENTION

Platform boards for load carrying vehicles, such as lorries, are commonly pivotably connected to the vehicle load platform, but they also may be pivotably or tiltably supported at the upper part of the stanchions.

For locking the boards to the stanchions there are particular locking means, which due to the supporting of the boards may be arranged at different levels and two or more such locking means may furthermore be interconnected for making possible a simultaneous locking in several zones.

From GB-A-1.235.490 is earlier known a locking device of this type, in which the platform board in its edges has mountings, in which locking means, arranged at the stanchion can be brought to engage. The locking means for this purpose are articulatedly connected to slewing brackets extending mainly vertically in the stanchion, and being articulatedly connected to an operating lever projecting through an opening in the front side of the stanchion. This operating lever is via a slewing bracket articulatedly connected to a wedge, which is displaceable to a limited extent within the stanchion.

This device operates well as long as the platform board or the stanchion is not exerted to such a big load, e.g. from inside the vehicle load platform, that the stanchion and/or the platform board is/are deformed. Already at a modest deformation it may be difficult to move the board by hand to locking position. A displacement of the locking clamp for the platform board, which cooperates with the stanchion locking means, one or a few millimeters, may result in that the board can not be locked to the stanchion.

By DE-U-80 16 892 is earlier known a locking device, at which the board instead of a recess has a lateral locking stop, which is intended to engage in a corresponding recess in the corresponding part of the stanchion and to be retained therein by a lever pivotably supported in the stanchion. This lever is thereupon locking in position by a separate safety bolt.

Also in this embodiment it may be difficult to move the board by hand to locking position, when it has been deformed and it is further difficult to unlock the safety bolt, when the board is subjected to a load from inside. It also has proven itself that this design could give raise to serious accidents, if the lever, when the locking bolt is unlocked, could swing up and hit the face of the persion, who has depressed the locking bolt, in cases where the board has been subjected to the pressure of a load from the inside.

## THE PURPOSE AND MOST ESSENTIAL FEATURES OF THE INVENTION

The purpose of the invention is to overcome these drawbacks, and to provide a simple, sturdy and safe locking device, which functions even if the stanchion or the platform board is deformed and the locking stop can not be pushed to locking position in the stanchion due to too big a distance between them. These tasks have been solved in that the operating lever as well as the locking clapper are pivotably supported in a common mounting fitted inside the stanchion and designed in such a manner, that the pivot axis of the operating lever is situated adjacent the front edge of the stanchion and the pivot axis of the locking clapper adjacent the rear wall of the stanchion, that the operating lever is designed as a double-arm lever, the one, longer arm of which is its operating part and the short arm of which is situated inside the stanchion and is articulatedly connected to a spring-loaded push rod, that the mounting is provided with an extended portion designed as a guide for the push rod, and that the pivot axis of the push rod in the locking position of the operating lever is situated on one, outer side of a vertical line through the supporting point of the operating lever and in its open position on the other, inner side of said vertical line, thus that the force provided by the spring due to the angular position of the operating lever will strive to move this to a readiness position or to an active locking position, in which later position the toggle joint axis has passed the extended position.

## DESCRIPTION OF THE DRAWINGS

In the accompanying drawing is shown an embodiment of the invention.

Fig. 1 is a front view of a stanchion carried by a load platform and provided with the device according to the invention.

Fig. 2 is a side view, partly in section, of the stanchion according to Fig. 1,

Fig. 3 shows in bigger scale a section through a portion of a stanchion according to the invention with the locking device in active position, and

Fig. 4 is a section analogous with Fig. 3 with the locking device in open position.

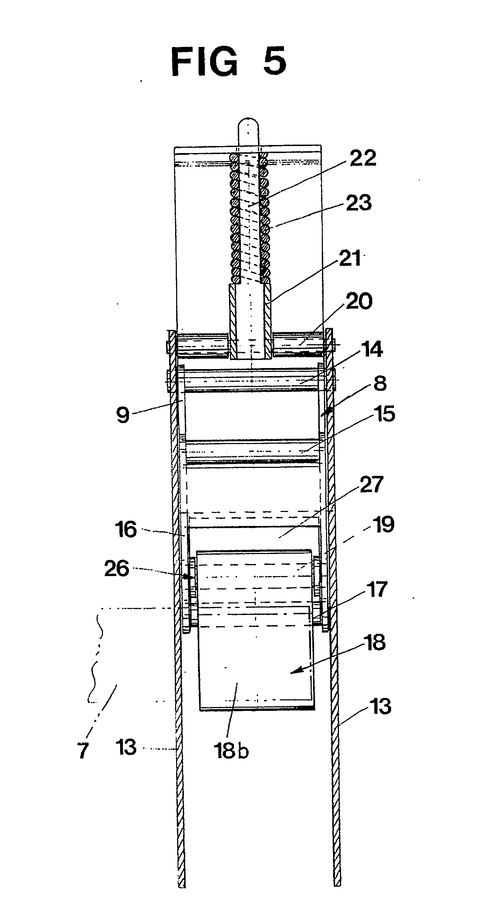

Fig. 5 is a section along line V-V in Fig. 3 of the locking device.

## DESCRIPTION OF EMBODIMENTS

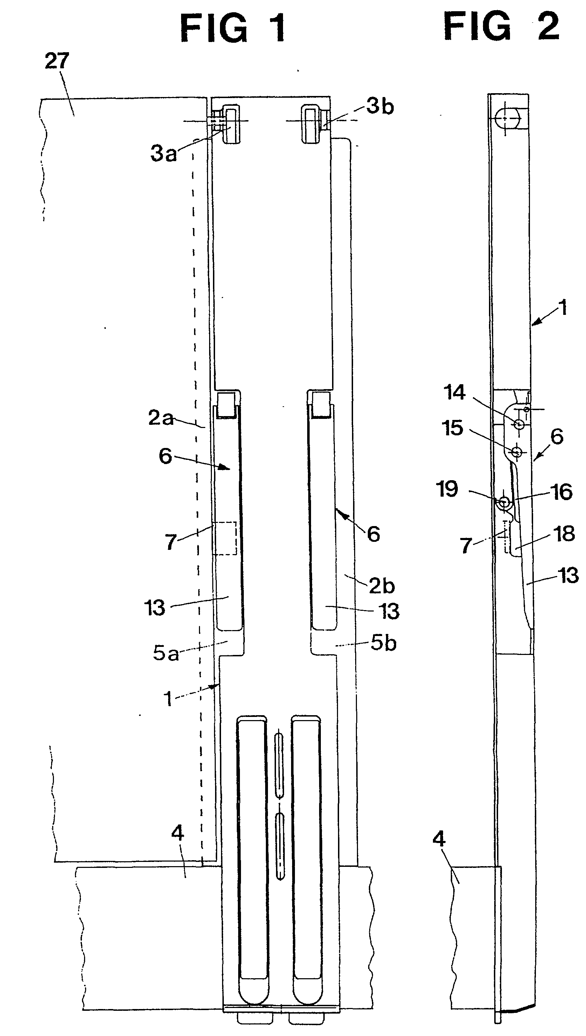

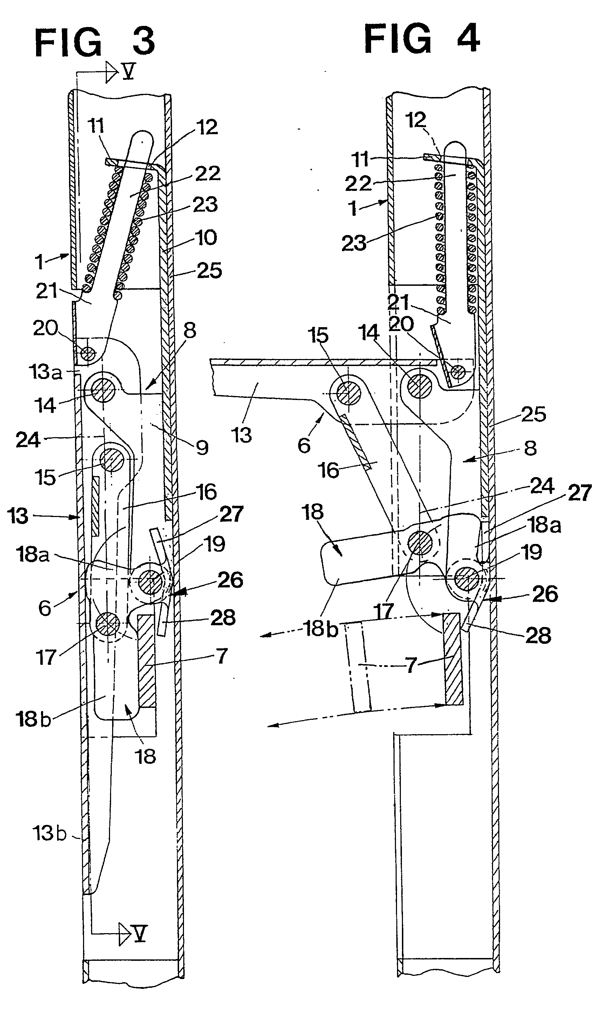

In Fig. 1 1 designates one of the stanchions, to which the boards 27 are intended to be locked. In the embodiment shown said stanchion has two plane flanges 2a and 2b, which are extended portions of the rear wall 25 of the stanchion and against which are intended to engage the side portions of two adjacent boards 27. The stanchion 1 in its upper part has recesses 3a, 3b, which in a manner known per se, serves for locking the upper edges of the boards to the stanchions. The load platform to which the stanchions are detachably attached in the drawings bear the designation 4, whereas 5a and 5b designate recesses made in the stanchion for locking bolts 7, fixedly arranged on the board 27, and which cooperate with locking means according to the invention, provided in each stanchion. These locking devices have been given the general designation 6 and they will be described more in detail with reference to Fig. 3 and Fig. 4.

In the mose common arrangement the load platform has a number of vertical stanchions, evenly spaced apart along the long sides of the platform, whereby the rearmost of said stanchions are situated in connection to the ends of the rearmost short side, but also the short sides may of course have more than those corner stanchions. It is understood that at least the front stanchions 1 contrary to the one shown in Fig. 1 has only one of the flanges 3a, 3b and the recesses 5a, 5b, resp.

Such as shown in Fig. 2 the locking device 6 shown therein is intended to act about in the middle of each board.

The boards 27 furthermore have laterally projecting locking lugs 7, which, when the boards are swung to vertical position, are intended to pass through the recesses 5a, 5b in each stanchion.

In front of each recess 5a, 5b there is affixed on the inside of the stanchion 1 a mounting, generally designated 8, which incorporates a cross-sectionally U-shaped part 9, the web portion of which has an extension 10 projecting upwards, the upper end of which is bent at 11. In this bent part 11 is made a hole 12, as a guide for a link 21, which will be described hereinafter.

A double-armed operating lever 13, which along the major part of its extension has a U-shaped cross-section, is at its upper side pivotably supported at the mounting 8 via a pivot 14. The shanks of the operating lever 13 are arranged to engage over the flanges of the part 9. The operating lever 13 is, by means of a second shaft journal 15, pivotably connected to a link 16, which in turn by means of a pivot 17 is articulatedly connected to a locking clapper 18. This is pivotably supported at the lower portion of the mounting 8 by means of a pivot 19. The locking clapper 18 has the shape of an angular member, and as can be seen from Fig. 3 it is shaped thus that one of its angle legs 18b in the active position of the locking device will engage the locking lug 7 projecting from each platform board, whereas the other angle leg 18a is pivotably supported about the shaft 19.

At the upper part of the operating lever 13, at 20, is articulatedly connected a push rod 21, which in the upper part 22 of its extension preferably has a rectangular cross-section with such dimensions, that it with play may be inserted through the hole 12 in the bent upper part 11 of the extension 10 of the mounting 9. Between said bent part 11 and a stop at the link 21 is provided a compression spring 23, which as can be seen from Fig. 3 and Fig. 4 strives to pivot the operating lever 13 in counter clock-wise direction, when this is in locking position according to Fig. 3 but in clock-wise direction when the operating lever 13 is in its inactive position, shown in Fig. 4. This depends on that the link 21 at the pivoting of the operating lever from inactive to active position will pass through a position where the pivoting centres 14 and 20 are aligned with each other and with the force direction of the spring.

The arrangement of the pivoting centres and the shape and length of the members forming part thereof means that the operating lever 13 and the linkage 16 together will form a toggle joint and due to the fact that the locking clapper 18 is pivotably connected to the linkage is achieved that it will be directly acted upon by the toggle joint, which means that the locking clapper will be pivoted in counter clock-wise direction at the pivoting of the operating lever in counter clock-wise direction. This means that it is possible without exerting too big force upon the operating lever 13b to urge the locking lugs 7 into the recesses in the stanchion even if the locking lugs due to deformation of the board should be at rather a big distance from the recesses.

Such as can be seen for Fig. 3 the toggle joint will pass its extended position, when the centre of the pivot 15 passes the connecting line 24 between the centre of the pivot 14 and the centre of the pivot 17. It is thereby obtained that the board can not be pivoted outwards as a consequence of a pressure from inside the cargo space, i.e. upon the locking clapper. Such a pressure towards the left in Fig. 3 should give the locking clapper 18 a tendency of pivoting in clock-wise direction. This is however prevented by the fact that the link 16 can not be displaced upwards as long as the operating lever 13 will occupy its folded down position of Fig. 3. The board therefore may only be released if the operating lever 13 is moved upwards. It is evident that the operating lever hereby will be able to take up two distinct, stable positions, i.e. that shown in Fig. 3, where the operating lever is urged by the intermediary portion of the spring-loaded push rod 21 to engagement against the locking clapper 18, which is in contact with the locking lug 7, whereby is prevented that the toggle joint shaft 15 can pass the connecting line 24. In this manner is prevented that inevitable shakes and vibrations unintentionally may open the lock. The other distinct position is shown in Fig. 4, wherein the operating lever 13 as well as the locking clapper 18 are maintained in open position and in a position in which the operating lever is within comfortable reach, and where the lower part of the push rod 21 limits the movement of the operating lever.

From the above it is evident that the locking can be released by moving the operating lever 13 upwards, i.e. in clock-wise direction, whereby the locking clapper by the linkage is pivoted upwards to the inactive position shown in Fig. 4, wherein the locking lug without hindrance can be moved out of the recess in the stanchion. In certain cases, e.g. if no pressure from the inside is acting upon the board, it may be difficult to unfold it, particularly if the board is completely smooth and its upper edge may be situated at such a level that it can not be reached by a person standing on the ground. For this purpose the locking clapper 18 may cooperate with a tilting device 26, which is supported about the pivot shaft 19, and one tilting arm 27 of which is arranged to be acted upon by one angle leg 18a of the locking clapper, when the operating lever 13 is moved to open position. The tilting arm 27 thus will be urged to engagement against the rear wall 25 at the same time as the other tilting arm 28 is pivoted in a direction towards the locking stop 7, which is thereby subjected to a pressure force, which pivots the board 27 outwards from its locking position.

As can be seen, particularly from Fig. 3, the pivot centre 14 of the operating lever is situated farther away from the rear wall of the operating lever 13 than the pivot centre of the locking clapper 18, and the pivot centre 15 of the operating lever 13 for the link is situated longer away from the front side of the operating lever 13 that its pivot centre 14, which resutlts in that the operating lever and other parts will be completely folded into the stanchion in the locking position.

Hereabove has been described a device for effecting locking in one locking zone. It is of course, as mentioned in the introduction, possible that the locking can take place in several zones at the same time by interconnection of locking devices.

**Claims**

1. A device at stanchions (1) for vehicle load platforms (2), to which stanchions, in their active closing position, platform side- and tail-boards are lockable, whereby the stanchion has an operating lever (13), which via a link (16) is connected to a pivotably supported locking clapper (18) adapted to cooperate with a locking lug (7) provided at the side edge of ther platform board, whereby the operating lever (13) and the link (16) together form a toggle joint (15), which, at pivoting of the operating lever to locking position passes its extended position and during said pivoting moves the locking clapper (18) to its active position, **characterized in** that the operating lever (13) as well as the locking clapper (18) are pivotably supported in a common mounting (8) fitted inside the stanchion (1) and designed in such a manner, that the pivot axis (14) of the operating lever (13) is situated adjacent the front edge of the stanchion and the pivot axis (19) of the locking clapper adjacent the rear wall (25) of the stanchion, that the operating lever (13) is designed as a double-armed lever, the one, longer arm (13b) of which is its operating part and the shorter arm (13a) of which is situated inside the stanchion and is articulatedly connected to a spring-loaded push rod (21), that the mounting (8) is provided with an extended portion (11) designed as a guide (12) for a push rod (22), and that the pivot axis (20) of the push rod (21) in the locking position of the operating lever is situated on one, outer side of a vertical line through the supporting point (14) of the operating lever and in its open position on the other, inner side of said vertical line, thus that the force provided by the spring (23) due to the angular position of the operating lever will strive to move this to a readiness position or to an active locking position, in which later position the toggle joint axis (15) has passed the extended position.

2. A device as claimed in claim 1, **characterized in** that the distance between the rear wall (25) of the stanchion and the pivot point (14) of the operating lever (13) is bigger than the distance between said rear wall and the pivot point (19) for the locking clapper, that the pivot points (15, 17) for the link (16) and the length thereof and the shape and dimension of the operating lever (13) and the locking clapper are so adapted, that the pivot axis (15) of the linkage (16), when the operating lever (13) is in locking position, will be situated inside an imagined line (24), which interconnects the pivot point (14) of the operating lever (13) at the stanchion and the pivot point (17) of the link (16) at the locking clapper (18), whereas in unlocked position the pivot axis (15) of the link (16) is situated outside said line (24), and that the operating lever (13) as well as the link (16) and the locking clapper (18) in said locking position are situated inside the limits of the stanchion housing.

3. A device as claimed in claim 1, **characterized in** that the operating lever (13) has a U-shaped cross-section, between the shanks of which is situated the also cross-sectionally U shaped mounting (8) as well as the locking clapper (18) being pivotably supported therebetween, and that the web portion of the U-shaped mounting is extended upwards (10) and terminates in a bent portion (11), provided with a hole (12), which constitutes a guide for the spring-loaded push rod (22).

4. A device as claimed in claim 1, **characterized in** that the locking clapper (18) is angular and with the end portion of one of its angle legs (18a) is pivotably supported in the stanchion (1) via a pivot shaft (19), that the link (16) is pivotably connected to the locking clapper at the inner one end of its other angle leg (18b) via a pivot (17), and that the other angle leg (18b) is designed with a mainly straight stop side (26) intended to cooperate with the locking lug (7) of the platform board.

**Patentansprüche**

1. Vorrichtung an Rungen (1) für Ladeplattformen (2) an Fahrzeugen, mit denen in ihrer geschlossenen Wirkstellung seitliche und rückwärtige Bordwände verriegelbar sind, wobei die Runge einen Betätigungshebel (13) aufweist, der über ein Verbindungselement (16) mit einem schwenkbar gelagerten Verriegelungsglied (18) verbunden ist, dass seinerseits mit einem Verriegelungsansatz (7) an der Seitenkante der Bordwand zusammenwirkt, und wobei der Betätigungshebel (13) und das Kupplungsglied (16) zusammen einen Kniehebel (15) bilden, der beim Verschwenken des Betätigungshebels (13) in die Verriegelungsposition über seine Verlängerungsstellung hinweg das Verriegelungsglied (18) in ihre Wirkstellung überführt, dadurch gekennzeichnet, dass sowohl der Betätigungshebel (13) als auch das Verriegelungsglied (18) in einer gemeinsamen Halterung (8) im Innern der Runge (1) schwenkbar gelagert und so ausgebildet sind, dass die Schwenkachse (14) des Betätigungshebels (13) neben der Vorderkante der Runge und die Schwenkachse (19) der Spannvorrichtung nahe der rückwärtigen Wandung (25) der Runge liegen; dass der Betätigungshebel (13) als zweiarmiger Hebel ausgebildet ist, wobei der längere Arm (13b) als Betätigungselement dient und der kürzere Arm im Inneren der Runge liegt und mit einer federbelasteten Schubstange (21) gelenkig verbunden ist; dass die Halterung (8) einen vorstehenden Teil (11) als Führung (12) für die Schubstange (22) aufweist; und dass die Achse (20) der Schubstange (21) in der Verriegelungsstellung auf der einen Seite, der Aussenseite einer durch den Stützpunkt (14) des Betätigungshebels verlaufenden Senkrechten und in der geöffneten Stellung auf der anderen, der Innenseite dieser Sennkrechten liegt, so dass die Kraft der Feder (23) aufgrund der Schrägstellung des Betätigungshebels die Tendenz hat, die Überführung in eine Bereitschaft- oder in eine effektive Verriegelungs- bzw. Schließstellung zu bewirken, wobei in der letztgenannten Stellung die Kniehebelachse (15) die durchgedrückte Stellung überschritten hat.

2. Vorrichtung nach Anspruch 1, dadurch gekennzeichnet, dass der Abstand zwischen der rückseitigen Rungenwandung (25) und der Schwenkachse (14) des Betätigungshebels (13) grösser als der Abstand zwischen der rückseitigen Wandung der Schwenkachse (19) der verriegelnden Spannvorrichtung ist; dass die Schwenkpunkte (15, 17) des Kupplungsgliedes (16) und seine Länge einerseits sowie Form und Abmessung des Betätigungshebels (13) und des Verriegelungsgliedes andererseits derart aufeinander abgestimmt sind, dass die Schwenkachse (15) des Kupplungsgliedes (16) bei in seiner Verriegelungsstellung befindlichem Betätigungshebel (13) gegenüber einer den Schwenkpunkt (14) des Betätigungshebels (13) an der Runge und den Drehpunkt (17) des Verbindungselements (16) an dem Verriegelungsglied (18) miteinander verbindenden Linie (24), zwischen dieser Linie und der Rückwand (25) liegt während in der unverriegelten Stellung die Schwenkachse (15) des Kupplungsgliedes (16) ausserhalb dieser Linie (24) liegt; und dass der Betätigungshebel (13), das Kupplungsglied (16) und das Verriegelungsglied (18) in dieser Verriegelungsstellung innerhalb der Begrenzungen der Runge liegen.

3. Vorrichtung nach Anspruch 1, dadurch gekennzeichnet, dass der Betätigungshebel (13) einen U-förmigen Querschnitt aufweist, zwischen dessen Schenkeln die Halterung (8) von ebenfalls U-förmigem Querschnitt sowie das dazwischen schwenkbar gelagerte Verriegelungsglied (18) angeordnet sind, und dass der Stegteil der U-förmigen Halterung eine nach oben gerichtete Verlängerung (10) besitzt und in einem abgebogenen Abschnitt (11) mit einer Öffnung (12) als Führung für die federbelastete Schubstange (22) endigt.

4. Vorrichtung nach Anspruch 1, dadurch gekennzeichnet, dass das Verriegelungsglied (18) winklig ausgebildet und am Ende eines ihrer Winkelschenkel (18a) über eine Welle (19) in der Runge (1) verschwenkbar gelagert ist; dass das Kupplungsglied (16) über eine Welle (17) mit dem Verriegelungsglied an einem innenliegenden Ende seines anderen Winkelschenkels (18b) in Verbindung steht, und dass dieser andere Winkelschenkel (18b) mit einer weitgehend geraden Anschlagseite (26) versehen ist, die mit dem Verriegelungsansatz (7) der Brodwand zusammenwirken soll.

## Revendications

1. Dispositif pour montants (1) de plateaux de véhicules (2), dans lequel les ridelles latérales et arrière du plateau peuvent être verrouillées en position de fermeture active sur lesdits montants, de manière que le montant comporte un levier de manœuvre (13) qui, par l'intermédiaire d'une biellette (16), est relié à une gâche de verrouillage (18) montée à rotation, agencée pour coopérer avec une patte de verrouillage (7) prévue sur le bord latéral de la ridelle, de manière que le levier de manœuvre (13) et que la biellette (16) forment ensemble un joint à genouillère (15) qui, lors du pivotement du levier de manœuvre en position de verrouillage, passe en position déployée et, pendant ledit pivotement, déplace la gâche de verrouillage (18) vers sa position active, caractérisé en ce que, le levier de manœuvre (13) de même que la gâche de verrouillage (18) sont montés à rotation dans un support de montage commun (8) monté à l'intérieur du montant (1) et agencé de façon que l'axe de pivot (14) du levier de manœuvre (13) soit situé à proximité du bord avant du montant et que l'axe de pivot (19) de la gâche de verrouillage rabattable soit adjacent à la paroi arrière (25) du montant, que le levier de manœuvre (13) est en forme de levier à deux bras, dont le premier, le bras le premier, le bras le plus long (13b), constitue sa partie active et le bras le plus court (13b) est situé à l'intérieur du montant et est articulé à une biellette formant poussoir (21) sollicitée par un ressort, que le support de montage (8) est pourvu d'un prolongement (11) prévu pour servir de guide (12) pour la biellette formant poussoir (22) et que l'axe de pivot (20) de la biellette (21), lorsque le levier de manœuvre est en position verrouillée, est située d'un côté, extérieur à une ligne verticale passant par le point d'appui (14) du levier de manœuvre et, dans sa position ouverte, de l'autre côté, intérieur à ladite ligne verticale, de telle sorte que la force exercée par le ressort (23), en raison de la position angulaire du levier de manœuvre, tende à le déplacer vers une position de départ ou vers une position de verrouillage active, position dans laquelle l'axe du joint à genouillère (15) a dépassé la position déployée.

2. Dispositif selon la revendication 1, caractérisé en ce que la distance entre la paroi arrière (25) du montant et le point de pivot (14) du levier de manœuvre (13) est supérieure à la distance entre ladite paroi arrière et le point de pivot (19) de la gâche de verrouillage, que les points d'articulation (15, 17) de la biellette (16) et la longueur de celle-ci, et la forme et les dimensions du levier de manœuvre (13) et de la gâche de verrouillage, sont agencées de telle sorte que lorsque le levier de manœuvre (13) est en position verrouillée, l'axe de pivot (15) de la biellette (16) se trouvera à l'intérieur d'une ligne imaginaire (24) reliant le point de pivot (14) du levier de manœuvre (13) sur le montant et le point de pivot (17) de la biellette (16) sur la gâche de verrouillage (18) tandis qu'en position déverrouillée, l'axe de pivot (15) de la biellette (16) est situé à l'extérieur de ladite ligne (24), et que le levier de manœuvre (13) ainsi que la biellette (16) et la gâche de verrouillage (18), dans ladite position de verrouillage, sont situés dans les limites du boîtier du montant.

3. Dispositif selon la revendication 1, caractérisé en ce que le levier de manœuvre (13) est d'une section transversale en forme de U entre les bras desquels est monté le support de montage (8) également d'une section transversale en forme de U, ainsi que la gâche de verrouillage (18), montée à rotation entre les deux et en ce que la partie formant âme du support de montage en forme de U est dirigée vers le haut (10) et se termine par une partie pliée (11), munie d'un trou (12) servant de guide à la biellette formant poussoir (22) sollicitée par un ressort.

4. Dispositif selon la revendication 1, caractérisé en ce que la gâche de verrouillage (18) est angulaire et que la partie d'extrémité de l'un de ses bras angulaires (18a) est montée à rotation dans le montant (1) par l'intermédiaire d'un arbre de pivot (19), en ce que la biellette (16) est montée à rotation sur la gâche de verrouillage à une extrémité intérieure de son autre bras angulaire (18b) par l'intermédiaire d'un pivot (17) et en ce que l'autre bras angulaire (18b) est pourvu d'un côté formant butée, principalement rectiligne (26), prévu pour coopérer avec la patte de verrouillage (7) de la ridelle.

# FIG 1

# FIG 2

# FIG 3

# FIG 4

# FIG 5